(19) Europäisches Patentamt
European Patent Office
Office européen des brevets

(11) **EP 1 495 287 B1**

(12) **FASCICULE DE BREVET EUROPEEN**

(45) Date de publication et mention
de la délivrance du brevet:
**15.06.2011 Bulletin 2011/24**

(51) Int Cl.:
***G01C 19/56*** *(2006.01)*

(21) Numéro de dépôt: **03740590.9**

(86) Numéro de dépôt international:
**PCT/FR2003/001149**

(22) Date de dépôt: **11.04.2003**

(87) Numéro de publication internationale:
**WO 2003/087721 (23.10.2003 Gazette 2003/43)**

(54) **RESONATEUR MECANIQUE A STRUCTURE VIBRANTE MONOLITHIQUE PLANE**

MECHANISCHER RESONATOR MIT FLACHER MONOLITISCHER VIBRATORSTRUKTUR

METHOD FOR PRODUCTION OF A MECHANICAL RESONATOR WITH A PLANAR MONOLITHIC VIBRATING STRUCTURE MACHINED IN A CRYSTALLINE MATERIAL AND RESONATOR PRODUCED THUS

(84) Etats contractants désignés:
**DE GB IT**

(30) Priorité: **17.04.2002 FR 0204795**

(43) Date de publication de la demande:
**12.01.2005 Bulletin 2005/02**

(73) Titulaire: **SAGEM Défense Sécurité**
**75015 Paris (FR)**

(72) Inventeur: **BEITIA, José**
**F-95390 Saint Prix (FR)**

(74) Mandataire: **Gorrée, Jean-Michel et al**
**Cabinet Plasseraud**
**52 rue de la Victoire**
**75440 Paris Cedex 09 (FR)**

(56) Documents cités:
**WO-A-01/55675**

- **ASHCROFT AND MERMIN: "Chapter 5 The Reciprocal Lattice" 1 January 1976 (1976-01-01), SOLID STATE PHYSICS, HOLT, RINEHART AND WINSTON, US , XP007913178 ISBN: 0-03-083993-9**
- **ELEY R ET AL: "Anisotropy effects on the vibration of circular rings made from crystalline silicon" JOURNAL OF SOUND & VIBRATION, LONDON, GB LNKD- DOI:10.1006/JSVI. 1999.2404, vol. 228, no. 1, 18 November 1999 (1999-11-18), pages 11-35, XP007913182 ISSN: 0022-460X**

**EP 1 495 287 B1**

**Description**

La présente invention concerne des perfectionnements apportés dans le domaine des dispositifs gyroscopiques à résonateurs mécaniques à structure vibrante monolithique plane usinée dans un matériau cristallin.

Les dispositifs gyroscopiques sont des dispositifs permettant de mesurer une vitesse de rotation ou un angle de rotation autour d'un ou plusieurs axes particuliers.

Les réalisations techniques de dispositifs gyroscopiques sont aujourd'hui nombreuses, mais le besoin se fait actuellement sentir pour des dispositifs de très faible encombrement (inférieur à quelques centimètres cube) réalisables en grande série à bas prix, résistant à des accélérations brutales et de niveau élevé, et capables de fournir des mesures avec une grande précision dans une plage importante de vitesse de rotation. Parmi les domaines potentiels d'application pour ces dispositifs, on peut notamment citer celui de la navigation et du guidage des petits missiles spinnés (courte portée anti-char par exemple) ou munitions spinnées (obus ou mortiers), c'est-à-dire des projectiles dont l'axe de roulis est soumis à une vitesse de rotation permanente élevée, typiquement de quelques tours par seconde pour les missiles spinnés ou les projectiles empennés et de plusieurs centaines de tours par seconde pour les projectiles gyroscopés.

Pour répondre à ce besoin, la technologie des gyroscopes vibrants associée à la réalisation de structures micro-usinées est particulièrement bien adaptée. Cependant, bien que plusieurs formules aient vu le jour et se trouvent à un stade de développement et d'industrialisation plus ou moins avancé, aucune d'entre elles ne permet de répondre correctement à la problématique posée par les applications précédemment citées et pour lesquelles une mesure de rotation sur l'axe de roulis est nécessaire. Cette incapacité de ces formules à répondre correctement aux besoins provient de la conjonction de deux causes :

la première cause est qu'elles sont intrinsèquement adaptées à un bouclage de type gyromètre (mesure de vitesse angulaire) ;
la deuxième cause est que les dynamiques de vitesse de rotation sur l'axe de roulis sont trop élevées pour qu'un bouclage gyrométrique offre une précision suffisante et/ou ne finisse par mettre en saturation l'électronique de mise en oeuvre du capteur.

De ce fait, il est connu que la seule réponse générale possible au problème posé consiste à utiliser des dispositifs intrinsèquement adaptés à un bouclage de type gyroscope (mesure de l'angle de rotation). En outre, comme cela est précisé dans le document FR 2 756 375, le bouclage gyroscope d'un résonateur mécanique vibrant disposé selon l'axe de roulis d'un porteur permet d'obtenir une grande précision de facteur d'échelle. En combinaison avec des résonateurs bouclés en mode gyromètre sur les axes transverses du porteur, il est ainsi possible de réaliser un système performant pour lequel les erreurs de biais des résonateurs transverses s'annulent sur un tour du porteur autour de son axe de roulis.

Dans le cas des dispositifs de technologie gyroscopes vibrants, la condition d'un bouclage optimal de type gyroscope passe par la recherche de structures dont l'anisotropie de fréquence entre les deux modes utiles couplés sous l'effet des forces de Coriolis est intrinsèquement nulle. L'anisotropie de fréquence peut être décomposée en trois termes principaux :

$$\Delta f = \Delta f_m + \Delta f_g + \Delta f_s$$

où

$\Delta f$ est l'anisotropie de fréquence globale,
$\Delta f_m$ est l'anisotropie de fréquence apportée par le matériau du résonateur,
$\Delta f_g$ est l'anisotropie de fréquence apportée par la géométrie du résonateur, et
$\Delta f_s$ est l'anisotropie de fréquence apportée par la suspension ou fixation du résonateur.

On pourrait ajouter d'autres termes comme par exemple les anisotropies apportées par la mise en oeuvre électronique, mais ces termes sont supposés de deuxième ordre devant les termes énoncés ici.

Ainsi, pour que l'anisotropie de fréquence globale $\Delta f$ soit nulle, il est suffisant que les trois composantes $\Delta f_m$, $\Delta f_g$ et $\Delta f_s$ soient toutes nulles. D'autres conditions suffisantes sont possibles, mais impliquent nécessairement des compensations entre les composantes $\Delta f_m$ et/ou $\Delta f_g$ et/ou $\Delta f_s$, ce qui finalement augmente la complexité de la définition de la structure du résonateur et rend particulièrement sensible cette structure aux variations de tout paramètre. Il semble donc fondamental de rechercher des structures dont chaque terme $\Delta f_m$, $\Delta f_g$ et $\Delta f_s$ est nul. Toutefois, on constate que la voie de conception usuellement pratiquée consiste, pour les structures de résonateurs micro-usinés, à ne prendre en compte que les aspects géométriques, alors qu'il est tout aussi fondamental de considérer le matériau constitutif du résonateur à travers ses symétries intrinsèques ou résultant du plan de coupe dans lequel sera taillée la pastille (wafer) supportant la structure du résonateur.

A titre d'exemple permettant d'illustrer ce qui vient d'être exposé, on peut considérer l'exemple connu de l'anneau vibrant dont la géométrie convient parfaitement à l'obtention d'un bouclage de type gyroscope. En réalisant cette structure dans une pastille de silicium (gravure humide) coupée selon le plan [001] et en utilisant les deux modes plans de déformation elliptique comme mode principal et comme mode secondaire, on obtient naturellement $\Delta f_g = 0$, mais $\Delta f_m$ est très largement supérieur à 1 Hz. En pratique, pour un anneau de fréquence moyenne 400 Hz, ayant un diamètre 5 mm et une épaisseur 100 $\mu$m, on obtient $\Delta f_m = 250$ Hz, si bien que finalement, en négligeant l'anisotropie de fréquence apportée par la fixation ou d'autres éléments, on obtient une anisotropie de fréquence globale $\Delta f$ de l'ordre de 250 Hz. Ce résultat est incompatible d'un bouclage performant de type gyroscope et illustre bien la problématique soulevée pour les résonateurs issus des technologies de la microélectronique.

En effet, les structures de résonateur micro-usinées utilisent comme matériaux supports des matériaux cristallins, qui sont naturellement anisotropes et qui de ce fait se prêtent particulièrement bien aux micro-usinages par gravure chimique, comme cela est pratiqué avec les procédés collectifs de la microélectronique. A l'avantage lié à l'aspect collectif des usinages, il convient cependant d'opposer l'inconvénient majeur de l'anisotropie du matériau. Cette anisotropie, lorsqu'aucune règle de choix des symétries du matériau en cohérence avec la symétrie des modes utilisés n'est respectée, conduit irrémédiablement à un terme $\Delta f_m$ non nul.

L'invention a donc pour but de proposer une solution technologique (procédé et dispositif) qui assure, de manière certaine, l'obtention d'une isotropie de fréquence apportée par le matériau cristallin dans lequel est taillé le résonateur vibrant à structure plane, étant entendu que la présente invention vise seulement à donner les moyens d'obtention de l'isotropie en fréquence apportée par le matériau ($\Delta f_m = 0$) et que les problèmes de l'obtention des isotropies de fréquence dues à la géométrie ($\Delta f_g$) et à la suspension ($\Delta f_s$) sont à résoudre par ailleurs aux fins d'obtention d'une isotropie de fréquence globale ($\Delta f = 0$) apte à constituer un dispositif intrinsèquement gyroscopique (voir par exemple le document FR2821422).

Il faut comprendre que, si le matériau du résonateur est isotrope, alors les pulsations propres des deux modes d'ordre k deviennent égales, cela quel que soit k : $\omega_1 = \omega_2 = \omega$).

D'autre part, les déformées des deux modes propres d'ordre k sont identiques par rotation du repère d'un angle de $\dfrac{\pi}{2k}$. C'est ainsi que les modes d'ordre 2 de l'anneau vibrant correspondent à des déformées elliptiques décalées l'une par rapport à l'autre d'un angle de $\dfrac{\pi}{4} = 45°$. De même, les modes d'ordre 3 de l'anneau vibrant correspondent à des déformées trilobées décalées l'une par rapport à l'autre d'un angle de $\dfrac{\pi}{6} = 30°$.

Le plan de coupe du matériau cristallin est défini par la position de son vecteur normal $\overline{V}$, qui est lui-même défini par ses coordonnées [x, y, z] dans un repère normé Oex, ey, ez. Ainsi la seule donnée des trois informations [x, y, z] permet de définir de manière unique le vecteur normal $\overline{V}$, et donc le plan de coupe. Par exemple la donnée [001] donne les coordonnées du vecteur normal et le plan est parallèle au plan (ex, ey).

Par ailleurs, on sait que les matériaux cristallins actuellement connus se décomposent en 32 classes réparties en 9 familles du point de vue de la représentation des matrices de rigidité ou de souplesse : on citera notamment les familles tétragonale (1), tégragonale (2), trigonale (1), trigonale (2), hexagonale et cubique.

Enfin, on précise que seuls les modes vibratoires d'ordre k = 2 et k = 3 des résonateurs vibrants peuvent, actuellement, être exploités de façon pratique, tandis que l'exploitation de modes vibratoires d'ordre supérieurs (k = 4, 5, ...) nécessiterait une mise en oeuvre électronique très complexe (multiplication du nombre des électrodes d'excitation/détection qui serait incompatible avec une réalisation d'un dispositif gyroscopique de taille réduite, voire très réduite).

Certes, le document WO 01/55675 mentionne, pour le seul cristal de silicium, la possibilité d'un mode vibratoire d'ordre 2 avec un cristal de silicium coupé dans le plan [111] et d'ordre 3 avec un cristal de silicium coupé dans le plan [100]. Toutefois il s'agit là d'une information ponctuelle qui ne fournit à l'homme du métier aucune indication, quant aux plans de coupe possibles pour les autres matériaux cristallins.

Ceci étant précisé, l'invention, selon un premier de ses aspects, propose un procédé pour constituer un résonateur mécanique à structure vibrante monolithique plane usinée dans un matériau cristallin, caractérisé en ce que :

- si le matériau cristallin est choisi parmi les matériaux cristallins à structure hexagonale, ce matériau est coupé dans le plan [001] et on exploite alors le mode vibratoire d'ordre 2, ou bien
- si le matériau cristallin est choisi parmi les matériaux cristallins à structure tétragonale (1), ou tétragonale (2), ou hexagonale, ce matériau est coupé dans le plan [001] et on exploite alors le mode vibratoire d'ordre 3,

ce grâce à quoi on confère au résonateur une isotropie naturelle de fréquence en matériau ($\Delta f_m = 0$).

Ces caractéristiques peuvent être résumées comme il suit :

```
                    famille
pour k = 2          hexagonale       →       [001]
```

```
        famille tétragonale (1) →  plan [001]
                tétragonale (2) →       [001]
pour k = 3      hexagonale       →       [001]
```
.

Bien entendu la mise en oeuvre des dispositions exposées peut accompagner une réalisation de structure axisymétrique qui conduit à une isotropie de géométrie Afg = 0.

Selon un second de ses aspects, l'invention propose un résonateur mécanique à structure vibrante monolithique plane usinée dans un matériau cristallin,

caractérisé en ce que, pour que le résonateur soit isotrope en fréquence en matériau ($\Delta f_m = 0$), le matériau cristallin est choisi parmi les suivants :

a) matériau cristallin à structure tétragonale (1) ou tétragonale (2) coupé dans le plan [001], le résonateur présentant alors une isotropie de fréquence en matériau pour le mode vibratoire d'ordre 3 ;

b) matériau cristallin à structure hexagonale coupé dans le plan [001], le résonateur présentant alors une isotropie de fréquence en matériau pour les deux modes vibratoires d'ordre 2 et 3.

En conséquence de quoi, un résonateur constitué conformément à l'invention par un choix approprié du matériau cristallin constitutif, du plan de coupe dudit matériau cristallin et de l'ordre k du mode vibratoire présente une isotropie de fréquence en matériau ($\Delta f_m = 0$) et, sous réserve de l'obtention par ailleurs d'une isotropie de fréquence globale $\Delta f = 0$ (par exemple avec $\Delta f_g = 0$ et $\Delta f_s = 0$, ou avec $\Delta f_g + \Delta f_s = 0$), un tel résonateur peut constituer le coeur d'un dispositif gyroscopique de conception optimale.

**Revendications**

1. Procédé pour constituer un résonateur mécanique à structure vibrante monolithique plane usinée dans un matériau cristallin,

   **caractérisé en ce que** :

   - si le matériau cristallin est choisi parmi les matériaux cristallins à structure tétragonale (1) ou tétragonale (2), ce matériau est coupé dans le plan [001], et on exploite alors le mode vibratoire d'ordre 3,
   - si le matériau cristallin est choisi parmi les matériaux cristallins à structure hexagonale, ce matériau est coupé dans le plan [001], et on exploite alors le mode vibratoire d'ordre 2 ou d'ordre 3,

   ce grâce à quoi le résonateur présente une isotropie naturelle de fréquence en matériau ($\Delta f_m = 0$).

**2.** Résonateur mécanique à structure vibrante monolithique plane usinée dans un matériau cristallin, **caractérisé en ce que**, pour que le résonateur soit isotrope en fréquence en matériau ($\Delta f_m = 0$), le matériau cristallin est choisi parmi les suivants :

- matériau cristallin à structure tétragonale (1) ou tétragonale (2) coupé dans le plan [001], le résonateur présentant alors une isotropie de fréquence en matériau pour le mode vibratoire d'ordre 3 ;
- matériau cristallin à structure hexagonale coupé dans le plan [001], le résonateur présentant alors une isotropie de fréquence en matériau pour les deux modes vibratoires d'ordre 2 et 3.

**Claims**

**1.** A method for producing a mechanical resonator with a planar monolithic vibrating structure machined in a crystalline material, **characterized in that**:

- when the crystalline material is chosen from crystalline materials of tetragonal (1) structure or tetragonal (2) structure , this material is cut in the [001] plane, and the 3rd-order vibration mode is then used,
- when the crystalline material is chosen from crystalline materials of hexagonal structure, this material is cut in the [001] plane, and the 2nd-order vibration mode or the 3rd-order vibration mode is then used,

whereby the resonator exhibits natural material-based frequency isotropy ($\Delta f_m = 0$)

**2.** A mechanical resonator with a planar monolithic vibrating structure machined in a crystalline material, **characterized in that**, for the resonator to exhibit material-based frequency isotropy ($\Delta f_m = 0$), the crystalline material is chosen from the following:

- a crystalline material of tetragonal (1) structure or tetragonal (2) structure cut in the [001] plane, the resonator then exhibiting material-based frequency isotropy in the 3rd-order vibration mode;
- a crystalline material of hexagonal structure or hexagonal structure cut in the [001] plane, the resonator then exhibiting material-based frequency isotropy in both the 2nd-order vibration mode and 3rd-order vibration mode.

**Patentansprüche**

**1.** Verfahren zur Bildung eines mechanischen Resonators mit einer planaren monolithischen Schwingungsstruktur, welcher in einem kristallinen Material gefertigt wird, **dadurch gekennzeichnet, dass**:

- wenn das kristalline Material aus kristallinen Materialien mit einer tetragonalen (1) oder tetragonalen (2) Struktur ausgewählt wird, das Material in der Ebene [001] geschnitten wird und nun eine Schwingungsart der 3. Ordnung genutzt wird,
- wenn das kristalline Material aus kristallinen Materialien mit einer hexagonalen Struktur ausgewählt wird, das Material in der Ebene [001] geschnitten wird und nun eine Schwingungsart der 2. oder 3. Ordnung genutzt wird,

wodurch der Resonator eine natürliche Material-Frequenz-Isotropie ($\Delta f_m = 0$) aufweist.

**2.** Mechanischer Resonator mit einer planaren monolithischen Schwingungsstruktur, welcher in einem kristallinen Material gefertigt wird, **dadurch gekennzeichnet, dass**, damit bei dem Resonator eine natürliche Material-Frequenz-Isotropie ($\Delta f_m = 0$) gegeben sei, das kristalline Material aus dem Folgenden ausgewählt wird:

- kristallines Material mit einer tetragonalen (1) oder tetragonalen (2) Struktur geschnitten in der Ebene [001], wobei der Resonator nun eine natürliche Material-Frequenz-Isotropie für die Schwingungsart der 3. Ordnung aufweist;
- kristallines Material mit einer hexagonalen Struktur geschnitten in der Ebene [001], wobei der Resonator nun eine natürliche Material-Frequenz-Isotropie für die beiden Schwingungsarten der 2. und 3. Ordnung aufweist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2756375
- FR 2821422
- WO 0155675 A